(19) Europäisches Patentamt / European Patent Office / Office européen des brevets

(11) EP 1 755 390 B1

(12) EUROPÄISCHE PATENTSCHRIFT

(45) Veröffentlichungstag und Bekanntmachung des Hinweises auf die Patenterteilung:
**09.07.2008 Patentblatt 2008/28**

(21) Anmeldenummer: **05746329.1**

(22) Anmeldetag: **30.05.2005**

(51) Int Cl.:
***A01N 37/50*** *(2006.01)*

(86) Internationale Anmeldenummer:
**PCT/EP2005/005780**

(87) Internationale Veröffentlichungsnummer:
**WO 2005/117587 (15.12.2005 Gazette 2005/50)**

(54) **FUNGIZIDE WIRKSTOFFKOMBINATION**

FUNGICIDAL ACTIVE SUBSTANCE COMBINATION

COMBINAISONS DE PRINCIPES ACTIFS FONGICIDES

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **04.06.2004 DE 102004027431**

(43) Veröffentlichungstag der Anmeldung:
**28.02.2007 Patentblatt 2007/09**

(73) Patentinhaber: **Bayer CropScience Aktiengesellschaft
40789 Monheim (DE)**

(72) Erfinder:
- **ECKSTEIN, Klaus
Bayer (Pty) Ltd.
1600 Isando (ZA)**
- **PITTA, Leonard
51371 Leverkusen (DE)**
- **TRIEBUS, Ludger
40789 Monheim (DE)**

(56) Entgegenhaltungen:
**WO-A-00/36916 US-A- 4 698 334**

- **DATABASE CA [Online] CHEMICAL ABSTRACTS SERVICE, COLUMBUS, OHIO, US; CHAZALET, M. ET AL: "Results of experiments using ethyl phosphites against various vine diseases" XP002350120 gefunden im STN Database accession no. 1978:184442 & PHYTIATRIE-PHYTOPHARMACIE , 26(1), 41-54 CODEN: PHPHA6; ISSN: 0031-8876, 1977,**
- **DATABASE CA [Online] CHEMICAL ABSTRACTS SERVICE, COLUMBUS, OHIO, US; CHALANDON, A. ET AL: "What is Mikal?" XP002350121 gefunden im STN Database accession no. 1980: 420593 & DEFENSE DES VEGETAUX , 33(200), 224-39 CODEN: DEVEAA; ISSN: 0011-7579, 1979,**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft eine neue Wirkstoffkombination, die ein bekanntes Oximether-Derivat, ein Phosphonat und ein bekanntes Phthalimid-Derivat enthält und sehr gut zur Bekämpfung von phytopathogenen Pilzen geeignet ist.

Es ist bereits bekannt, dass das Oxim-Derivat 2-[α-{[(α-Methyl-3-trifluoromethyl-benzyl)imino]-oxy}-o-tolyl]-glyoxylsäure-methylester-O-methyloxim mit dem Common Name Trifloxystrobin fungizide Eigenschaften besitzt (vgl. EP-A-0 460 575). Die Wirksamkeit dieses Stoffes ist gut, lässt aber bei niedrigen Aufwandmengen in manchen Fällen zu wünschen übrig. Die Herstellung dieser Verbindung ist ebenfalls aus EP-A-0 460 575 bekannt.

Ferner ist bekannt, dass Phosphonsäure und deren Derivate (Phosphonate), wie das Phosponat Ethyl Hydrogen Phosphonat mit dem Common Name Fosetyl-Aluminium fungizide Eigenschaften besitzten (vgl. FR-A-2254276). Die Wirksamkeit dieser Stoffe ist gut; sie lässt jedoch bei niedrigen Aufwandmengen in manchen Fällen zu wünschen übrig. Die Herstellung dieser Verbindung ist ebenfalls aus FR-A-2254276 bekannt.

Es ist außerdem bekannt, dass das Phthalimid-Derivat 2-[(Trichlormethyl)thio]-1H-isoindol-1,3(2H)-dion mit dem Common Name Folpet fungizide Eigenschaften besitzt (vgl. US 2,553,770). Die Wirksamkeit dieses Stoffes ist gut, sie lässt jedoch bei niedrigen Aufwandmengen in manchen Fällen zu wünschen übrig. Die Herstellung dieser Verbindung ist ebenfalls bekannt.

Aus WO 00/36916 ist außerdem die Wirkstoffkombination aus Trifloxystrobin und Fosetyl-Aluminium bekannt.

Da sich zudem die ökologischen und ökonomischen Anforderungen an moderne Fungizide laufend erhöhen, beispielsweise was Wirkspektrum, Toxizität, Selektivität, Aufwandmenge, Rückstandsbildung und günstige Herstellbarkeit angeht, und außerdem z.B. Probleme mit Resistenzen auftreten können, besteht die ständige Aufgabe, neue Fungizide zu entwickeln, die zumindest in Teilbereichen Vorteile gegenüber den bekannten aufweisen.

Gegenstand der Erfindung sind Wirkstoffkombinationen, die die genannten Aufgaben zumindest in Teilaspekten lösen.

Es wurde nun gefunden, dass die neue Wirkstoffkombination, die 2-[α-{[(α-Methyl-3-trifluoro-methyl-benzyl) imino]oxy}-o-tolyl]-glyoxylsäure-methylester-O-methyloxim der Formel (I)

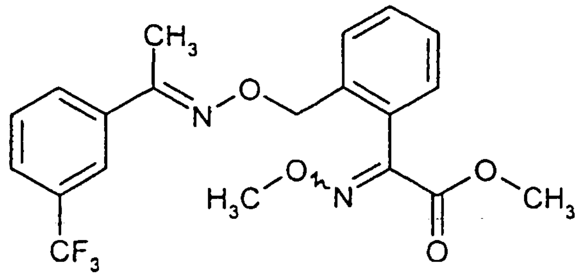

(I)

(Trifloxystrobin)

und

(1) Phosphonsäure oder ein Phosphonat (der Formel (II)

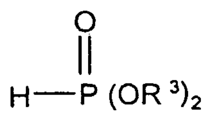

(II)

wobei

$R^3$ gleich oder verschieden für H, $^1/_n M^{n+}$ oder $(C_1\text{-}C_4)$-Alkyl und
M für ein Kation steht;

und

(2) 2-[(Trichlormethyl)thio]-1H-isoindol-1,3(2H)-dion (Referenz: US 2,553,770) der Formel (III)

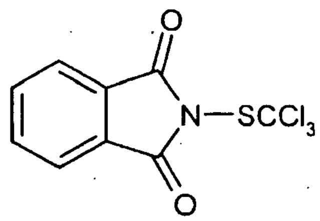

(III)

(Folpet)

enthält, sehr gute fungizide Eigenschaften besitzt.

Überraschenderweise ist die fungizide Wirkung der erfindungsgemäßen Wirkstoffkombination wesentlich höher als die Summe der Wirkungen der einzelnen Wirkstoffe bzw. der bekannten Wirkstoffkombination. Es liegt also ein nicht vorhersehbarer, echter synergistischer Effekt vor und nicht nur eine Wirkungsergänzung.

Bevorzugte Fungizide der Formel (II) sind neben Phosphonsäure $HP(O)(OH)_2$), (IIa), deren Salze der Formel (IIb),

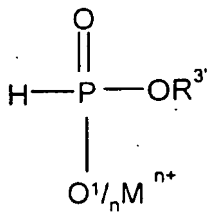

(IIb)

wobei

$R^{3'}$ H oder $^1/_n M^{n+}$ und

M ein anorganisches oder organisches Kation, vorzugsweise Al oder ein Alkali- oder Erdalkalimetall, besonders bevorzugt Na, K oder Al, bedeutet,

oder gemischte Estersalze der Formel (IIc),

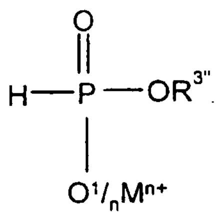

(IIc)

wobei

$R^{3''}$ $(C_1\text{-}C_4)$-Alkyl, vorzugsweise $C_2H_5$, und

M ein anorganisches oder organisches Kation, vorzugsweise Al oder ein Alkali- oder Erdalkalimetall, besonders bevorzugt Al, Na, oder K bedeutet.

Ganz besonders bevorzugt sind die Verbindungen

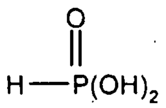

(II-1)

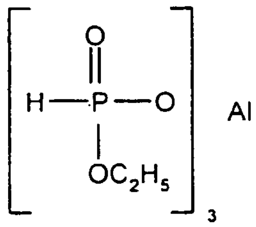

(II-4)

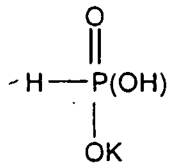

(II-2)

und

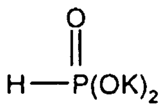

(II-3)

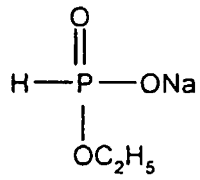

(II-5)

insbesondere die Verbindung (II-4) (Fosetyl-Al).

Phosphonsäure wird in der Literatur auch als phosphorige Säure (eigentlich Tautomer der Phosphonsäure, P $(OH)_3$) bezeichnet, ihre Salze entsprechend als (sekundäre) Phosphite.

Die aufgeführten Wirkstoffe, insbesondere Trifloxystrobin, Phosphonsäure, deren Mono- und Dikalium-salz, Fosetyl-Al und Folpet sind kommerziell erhältlich. Hinweise zu Bezug und gegebenenfalls Synthese finden sich in C.D.S. Tonlin, The Pesticide Manual, 13. Auflage, British CropProtection Council, Farnham 2003 und der darin zitierten Literatur. Der Wirkstoff der Formel (I) ist bekannt (vgl. z. B. EP-A-460 575).

Aus der Strukturformel für den Wirkstoff der Formel (I) ist ersichtlich, dass die Verbindung als E- oder Z-Isomer vorliegen kann. Die Verbindung (I) kann daher als Gemisch von verschiedenen Isomeren oder auch in Form eines einzigen Isomeren vorliegen. Bevorzugt ist die Verbindung der Formel (I), in der diese als E-Isomer vorliegt

Die erfindungsgemäße Wirkstoffkombination enthält die Wirkstoffe der Formeln (I), (II) und (III). Sie kann darüber hinaus auch weitere fungizid wirksame Zumischkomponenten enthalten.

Bevorzugte Wirkstoffkombinationen aus Wirkstoffen der Formeln (I), (II) und (III) sind die im folgenden aufgeführten:

(a) (I) / (II-1) / (III), (b) (I) / (II-2) / (III), (c) (I) / (II-3) / (III), (d) (I) / (II-4) / (III), (e) (I) / (II-5) / (III).

Davon ist besonders bevorzugt die Kombination d (Trifloxystrobin, Fosetyl-Al und Folpet).

Wenn die Wirkstoffe in den erfindungsgemäßen Wirkstoffkombinationen in bestimmten Gewichtsverhältnissen vorhanden sind, zeigt sich ein synergistischer Effekt besonders deutlich. Jedoch können die Gewichtsverhältnisse der Wirkstoffe in den Wirkstoffkombinationen in einem relativ großen Bereich variiert werden. Die Gewichtsverhältntisse der Verbindungen der Formeln (I) : (II) oder (II)a: (III) können beispielsweise im Bereich zwischen 1 : 2 : 4 und 1 : 50 : 100 liegen. Bevorzugt liegen die Gewichtsverhältnisse der Verbindungen der Formeln (I) : (II) oder (II)a: (III) im Bereich zwischen 1 : 8 : 16 und 1 : 24 : 48.

Die erfindungsgemäßen Wirkstoffkombinationen weisen eine starke mikrobizide Wirkung auf und können zur Bekämpfung von unerwünschten Mikroorganismen, wie Pilzen und Bakterien, im Pflanzenschutz und im Materialschutz eingesetzt werden.

Fungizide lassen sich im Pflanzenschutz beispielsweise zur Bekämpfung von Plasmodiophoromycetes, Oomycetes, Chytridiomycetes, Zygomycetes, Ascomycetes, Basidiomycetes und Deuteromycetes einsetzen.

Bakterizide lassen sich im Pflanzenschutz beispielsweise zur Bekämpfung von Pseudomonadaceae, Rhizobiaceae, Enterobacteriaceae, Corynebacteriaceae und Streptomycetaceae einsetzen.

Die erfindungsgemäßen Wirkstoffkombinationen besitzen sehr gute fungizide Eigenschaften und lassen sich zur Bekämpfung von phytopathogenen Pilzen, wie Plasmodiophoromycetes, Oomycetes, Chytridiomycetes, Zygomycetes, Ascomycetes, Basidiomycetes, Deuteromycetes usw. einsetzen.

Beispielhaft aber nicht begrenzend seien einige Erreger von pilzlichen und bakteriellen Erkrankungen, die unter die oben aufgezählten Oberbegriffe fallen, genannt:

Xanthomonas-Arten, wie beispielsweise Xanthomonas campestris pv. oryzae;

Pseudomonas-Arten, wie beispielsweise Pseudomonas syringae pv. lachrymans;

Erwinia-Arten, wie beispielsweise Erwinia amylovora;

Erkrankungen, hervorgerufen durch Erreger des Echten Mehltaus wie z.B.

Blumeria-Arten, wie beispielsweise Blumeria graminis;

Podosphaera-Arten, wie beispielsweise Podosphaera leucotricha;

Sphaerotheca-Arten, wie beispielsweise Sphaerotheca fuliginea;

Uncinula-Arten, wie beispielsweise Uncinula necator;

Erkrankungen, hervorgerufen durch Erreger von Rostkrankheiten wie z.B.

Gymnosporangium-Arten, wie beispielsweise Gymnosporangium sabinae

Hemileia-Arten, wie beispielsweise Hemileia vastatrix;

Phakopsora-Arten, wie beispielsweise Phakopsora pachyrhizi und Phakopsora meibomiae;

Puccinia-Arten, wie beispielsweise Puccinia recondita;

Uromyces-Arten, wie beispielsweise Uromyces appendiculatus;

Erkrankungen, hervorgerufen durch Erreger der Gruppe der Oomyceten wie z.B.

Bremia-Arten, wie beispielsweise Bremia lactucae;

Peronospora-Arten, wie beispielsweise Peronospora pisi oder P. brassicae;

Phytophthora-Arten, wie beispielsweise Phytophthora infestans;

Plasmopara-Arten, wie beispielsweise Plasmopara viticola;

Pseudoperonospora-Arten, wie beispielsweise Pseudoperonospora humuli oder Pseudoperonospora cubensis;

Pythium-Arten, wie beispielsweise Pythium ultimum;

Blattfleckenkrankheiten und Blattwelken, hervorgerufen durch z.B.

Alternaria-Arten, wie beispielsweise Alternaria solani;

Cercospora-Arten, wie beispielsweise Cercospora beticola;

Cladiosporum-Arten, wie beispielsweise Cladiosporium cucumerinum;

Cochliobolus-Arten, wie beispielsweise Cochliobolus sativus (Konidienform: Drechslera, Syn: Helminthosporium);

Colletotrichum-Arten, wie beispielsweise Colletotrichum lindemuthanium;

Cycloconium-Arten, wie beispielsweise Cycloconium oleaginum;

Diaporthe-Arten, wie beispielsweise Diaporthe citri;

Elsinoe-Arten, wie beispielsweise Elsinoe fawcettii;

Gloeosporium-Arten, wie beispielsweise Gloeosporium laeticolor;

Glomerella-Arten, wie beispielsweise Glomerella cingulata;

Guignardia-Arten, wie beispielsweise Guignardia bidwelli;

Leptosphaeria-Arten, wie beispielsweise Leptosphaeria maculans;

Magnaporthe-Arten, wie beispielsweise Magnaporthe grisea;

Mycosphaerella-Arten, wie beispielsweise Mycosphaerelle graminicola;

Phaeosphaeria-Arten, wie beispielsweise Phaeosphaeria nodorum;

Pyrenophora-Arten, wie beispielsweise Pyrenophora teres;

Ramularia-Arten, wie beispielsweise Ramularia collo-cygni;

Rhynchosporium-Arten, wie beispielsweise Rhynchosporium secalis;

Septoria-Arten, wie beispielsweise Septoria apii;

Typhula-Arten, wie beispielsweise Typhula incarnata;

Venturia-Arten, wie beispielsweise Venturia inaequalis;

Wurzel- und Stengelkrankheiten, hervorgerufen durch z.B.

Corticium-Arten, wie beispielsweise Corticium graminearum;

Fusarium-Arten, wie beispielsweise Fusarium oxysporum;

Gaeumannomyces-Arten, wie beispielsweise Gaeumannomyces graminis;

Rhizoctonia-Arten, wie beispielsweise Rhizoctonia solani;

Tapesia-Arten, wie beispielsweise Tapesia acuformis;

Thielaviopsis-Arten, wie beispielsweise Thielaviopsis basicola;

Ähren- und Rispenerkrankungen (inklusive Maiskolben), hervorgerufen durch z.B.

Alternaria-Arten, wie beispielsweise Alternaria spp.;

Aspergillus-Arten, wie beispielsweise Aspergillus flavus;

Cladosporium-Arten, wie beispielsweise Cladosporium spp.;

Claviceps-Arten, wie beispielsweise Claviceps purpurea;

Fusarium-Arten, wie beispielsweise Fusarium culmorum;

Gibberella-Arten, wie beispielsweise Gibberella zeae;

Monographella-Arten, wie beispielsweise Monographella nivalis;

Erkrankungen, hervorgerufen durch Brandpilze wie z.B.

Sphacelotheca-Arten, wie beispielsweise Sphacelotheca reiliana;

Tilletia-Arten, wie beispielsweise Tilletia caries;

Urocystis-Arten, wie beispielsweise Urocystis occulta;

Ustilago-Arten, wie beispielsweise Ustilago nuda;

Fruchtfäule hervorgerufen durch z.B.

Aspergillus-Arten, wie beispielsweise Aspergillus flavus;

Botrytis-Arten, wie beispielsweise Botrytis cinerea;

Penicillium-Arten, wie beispielsweise Penicillium expansum;

Sclerotinia-Arten, wie beispielsweise Sclerotinia sclerotiorum;

Verticilium-Arten, wie beispielsweise Verticilium alboatrum;

Samen- und bodenbürtige Fäulen und Welken, sowie Sämlingserkrankungen, hervorgerufen durch z.B.

Fusarium-Arten, wie beispielsweise Fusarium culmorum;

Phytophthora Arten, wie beispielsweise Phytophthora cactorum;

Pythium-Arten, wie beispielsweise Pythium ultimum;

Rhizoctonia-Arten, wie beispielsweise Rhizoctonia solani;

Sclerotium-Arten, wie beispielsweise Sclerotium rolfsii;

Krebserkrankungen, Gallen und Hexenbesen, hervorgerufen durch z.B.

Nectria-Arten, wie beispielsweise Nectria galligena;

Welkeerkrankungen hervorgerufen durch z.B.

Monilinia-Arten, wie beispielsweise Monilinia laxa;

Deformationen von Blättern, Blüten und Früchten, hervorgerufen durch z.B.

Taphrina-Arten, wie beispielsweise Taphrina deformans;

Degenerationserkrankungen holziger pflanzen, hervorgerufen durch z.B.

Esca-Arten, wie beispielsweise Phaemoniella clamydospora;

Blüten- und Samenerkrankungen, hervorgerufen durch z.B.

Botrytis-Arten, wie beispielsweise Botrytis cinerea;

Erkrankungen von Pflanzenknollen, hervorgerufen durch z.B.

Rhizoctonia-Arten, wie beispielsweise Rhizoctonia solani;

Die erfindungsgemäßen Wirkstoffe weisen auch eine sehr gute stärkende Wirkung in Pflanzen auf. Sie eignen sich daher zur Mobilisierung pflanzeneigener Abwehrkräfte gegen Befall durch unerwünschte Mikroorganismen.

Unter pflanzenstärkenden (resistenzinduzierenden) Stoffen sind im vorliegenden Zusammenhang solche Substanzen zu verstehen, die in der Lage sind, das Abwehrsystem von Pflanzen so zu stimulieren, dass die behandelten Pflanzen bei nachfolgender Inokulation mit unerwünschten Mikroorganismen weitgehende Resistenz gegen diese Mikroorganismen entfalten.

Unter unerwünschten Mikroorganismen sind im vorliegenden Fall phytopathogene Pilze und Bakterien zu verstehen. Die erfindungsgemäßen Stoffe können also eingesetzt werden, um Pflanzen innerhalb eines gewissen Zeitraumes nach der Behandlung gegen den Befall durch die genannten Schaderreger zu schützen. Der Zeitraum, innerhalb dessen Schutz herbeigeführt wird, erstreckt sich im allgemeinen von 1 bis 10 Tage, vorzugsweise 1 bis 7 Tage nach der Behandlung der Pflanzen mit den Wirkstoffen.

Die erfindungsgemäßen Wirkstoffkombinationen eignen sich besonders gut zur Bekämpfung von Phytophthora infestans und Plasmopara viticola.

Die erfindungsgemäßen Wirkstoffkombinationen eignen sich besonders gut zur Verwendung im Weinbau.

Die erfindungsgemäßen Wirkstoffkombinationen eignen sich auch besonders gut zur Verwendung im Gemüseanbau.

Die gute Pflanzenverträglichkeit der Wirkstoffkombinationen in den zur Bekämpfung von Pflanzenkrankheiten notwendigen Konzentrationen erlaubt eine Behandlung von oberirdischen Pflanzenteilen, von Pflanz- und Saatgut, und des Bodens. Die erfindungsgemäßen Wirkstoffkombinationen können zur Blattapplikation oder auch als Beizmittel eingesetzt werden.

Die erfindungsgemäßen Wirkstoffkombinationen eignen sich auch zur Steigerung des Ernteertrages. Sie sind außerdem mindertoxisch und weisen eine gute Pflanzenverträglichkeit auf.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Spross, Blatt, Blüte und Wurzel verstanden werden, wobei beispielhaft Blätter, Nadeln, Stängel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen.

Wie bereits oben erwähnt, können erfindungsgemäß alle Pflanzen und deren Teile behandelt werden. In einer bevorzugten Ausführungsform werden wild vorkommende oder durch konventionelle biologische Zuchtmethoden, wie Kreuzung oder Protoplastenfusion erhaltenen Pflanzenarten und Pflanzensorten sowie deren Teile behandelt. In einer weiteren bevorzugten Ausführungsform werden transgene Pflanzen und Pflanzensorten, die durch gentechnologische Methoden gegebenenfalls in Kombination mit konventionellen Methoden erhalten wurden (Genetically Modified Organisms) und deren Teile behandelt. Der Begriff "Teile" bzw. "Teile von Pflanzen" oder "Pflanzenteile" wurde oben erläutert.

Besonders bevorzugt werden erfindungsgemäß Pflanzen der jeweils handelsüblichen oder in Gebrauch befindlichen Pflanzensorten behandelt. Unter Pflanzensorten versteht man Pflanzen mit neuen Eigenschaften ("Traits"), die sowohl durch konventionelle Züchtung, durch Mutagenese oder durch rekombinante DNA-Techniken gezüchtet worden sind. Dies können Sorten, Bio- und Genotypen sein.

Je nach Pflanzenarten bzw. Pflanzensorten, deren Standort und Wachstumsbedingungen (Böden, Klima, Vegetationsperiode, Ernährung) können durch die erfindungsgemäße Behandlung auch überadditive ("synergistische") Effekte auftreten. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel, besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte möglich, die über die eigentlich zu erwartenden Effekte hinausgehen.

Zu den bevorzugten erfindungsgemäß zu behandelnden transgenen (gentechnologisch erhaltenen) Pflanzen bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte,

höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzen-pathogenen Pilzen, Bakterien und/oder Viren sowie eine erhöhte Toleranz der Pflanzen gegen bestimmte herbizide Wirkstoffe. Als Beispiele transgener Pflanzen werden die wichtigen Kulturpflanzen, wie Getreide (Weizen, Reis), Mais, Soja, Kartoffel, Baumwolle, Raps sowie Obstpflanzen (mit den Früchten Äpfel, Birnen, Zitrusfrüchten und Weintrauben) erwähnt, wobei Mais, Soja, Kartoffel, Baumwolle und Raps besonders hervorgehoben werden. Als Eigenschaften ("Traits") werden besonders hervorgehoben die erhöhte Abwehr der Pflanzen gegen Insekten durch in den Pflanzen entstehende Toxine, insbesondere solche, die durch das genetische Material aus Bacillus Thuringiensis (z.B. durch die Gene CryIA(a), CryIA(b), CryIA(c), CryIIA, CryIIIA, CryIIIB2, Cry9c Cry2Ab, Cry3Bb und CryIF sowie deren Kombinationen) in den Pflanzen erzeugt werden (im Folgenden "Bt Pflanzen"). Als Eigenschaften ("Traits") werden auch besonders hervorgehoben die erhöhte Abwehr von Pflanzen gegen Pilze, Bakterien und Viren durch Systemische Akquirierte Resistenz (SAR), Systemin, Phytoalexine, Elicitoren sowie Resistenzgene und entsprechend exprimierte Proteine und Toxine. Als Eigenschaften ("Traits") werden weiterhin besonders hervorgehoben die erhöhte Toleranz der Pflanzen gegenüber bestimmten herbiziden Wirkstoffen, beispielsweise Imidazolinonen, Sulfonylharnstoffen, Glyphosate oder Phosphinotricin (z.B. "PAT"-Gen). Die jeweils die gewünschten Eigenschaften ("Traits") verleihenden Gene können auch in Kombinationen miteinander in den transgenen Pflanzen vorkommen. Als Beispiele für "Bt Pflanzen" seien Maissorten, Baumwollsorten, Sojasorten und Kartoffelsorten genannt, die unter den Handelsbezeichnungen YIELD GARD® (z.B. Mais, Baumwolle, Soja), KnockOut® (z.B. Mais), StarLink® (z.B. Mais), Bollgard® (Baumwolle), Nucotn® (Baumwolle) und NewLeaf® (Kartoffel) vertrieben werden. Als Beispiele für Herbizid tolerante Pflanzen seien Maissorten, Baumwollsorten und Sojasorten genannt, die unter den Handelsbezeichnungen Roundup Ready® (Toleranz gegen Glyphosate z.B. Mais, Baumwolle, Soja), Liberty Link® (Toleranz gegen Phosphinotricin, z.B. Raps), IMI® (Toleranz gegen Imidazolinone) und STS® (Toleranz gegen Sulfonylharnstoffe z.B. Mais) vertrieben werden. Als Herbizid resistente (konventionell auf Herbizid-Toleranz gezüchtete) Pflanzen seien auch die unter der Bezeichnung Clearfield® vertriebenen Sorten (z.B. Mais) erwähnt. Selbstverständlich gelten diese Aussagen auch für in der Zukunft entwickelte bzw. zukünftig auf den Markt kommende Pflanzensorten mit diesen oder zukünftig entwickelten genetischen Eigenschaften ("Traits").

Die aufgeführten Pflanzen können besonders vorteilhaft erfindungsgemäß mit den erfindungsgemäßen Wirkstoffmischungen behandelt werden. Die bei den Wirkstoffen bzw. Mischungen oben angegebenen Vorzugsbereiche gelten auch für die Behandlung dieser Pflanzen. Besonders hervorgehoben sei die Pflanzenbehandlung mit den im vorliegenden Text speziell aufgeführten Mischungen.

Die erfindungsgemäße Behandlung der Pflanzen und Pflanzenteile mit den Wirkstoffen erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen und bei Vermehrungsmaterial, insbesondere bei Samen, weiterhin durch ein- oder mehrschichtiges Umhüllen.

Die erfindungsgemäßen Wirkstoffkombinationen können in die üblichen Formulierungen überführt werden, wie Lösungen, Emulsionen, Suspensionen, Pulver, Schäume, Pasten, Granulate, Aerosole, Feinstverkapselungen in polymeren Stoffen und in Hüllmassen für Saatgut, sowie ULV-Formulierungen.

Diese Formulierungen werden in bekannter Weise hergestellt, z.B. durch Vermischen der Wirkstoffe bzw. der Wirkstoffkombinationen mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol oder Atkylnaphthaline, chlorierte Aromaten oder chlorierte aliphatische Kohlenwasserstoffe, wie Chlorbenzole, Chlorethylene oder ‘Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel wie Dimethylformamid und Dimethylsulfoxid, sowie Wasser. Mit verflüssigten gasförmigen Streckmitteln oder Trägerstoffen sind-solche Flüssigkeiten gemeint, welche bei normaler Temperatur und unter Normaldruck gasförmig sind, z.B. Aerosol-Treibgase, wie Butan, Propan, Stickstoff und Kohlendioxid. Als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstängel. Als Emulgier- und/oder schaumerzeugende Mittel kommen in Frage: z.B. nichtionogene und anionische Emulgatoren, wie Polyoxyethylen-Fettsäureester, Polyoxyethylen-Fettalkoholether, z.B. Alkylarylpolyglycol-ether, Alkylsulfonate, Alkylsulfate, Arylsulfonate sowie Eiweißhydrolysate. Als Dispergiermittel kommen in Frage: z.B. Lignin-Sulfitablaugen und Methylcellulose.

Es können in den Formulierungen Haftmittel wie Carboxymethylcellulose, natürliche und synthetische pulverige,

körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink verwendet werden.

Die Formulierungen enthalten im allgemeinen zwischen 0,1 und 95 Gew.-% Wirkstoffe, vorzugsweise zwischen 0,5 und 90 %.

Die erfindungsgemäßen Wirkstoffkombinationen können als solche oder in ihren Formulierungen auch in Mischung mit bekannten Fungiziden, Bakteriziden, Akariziden, Nematiziden oder Insektiziden verwendet werden, um so z.B. das Wirkungsspektrum zu verbreitern oder Resistenzentwicklungen vorzubeugen.

**Fungizide:**

*1. Inhibition der Nucleinsäure Synthese*
Benalaxyl, Benalaxyl-M, Bupirimat, Chiralaxyl, Clozylacon, Dimethirimol, Ethirimol, Furalaxyl, Hymexazol, Metalaxyl-M, Ofurace, Oxadixyl, Oxolinsäure

*2. Inhibition der Mitose und Zellteilung*
Benomyl, Carbendazim, Diethofencarb, Fuberidazole, Pencycuron, Thiabendazol, Thiophanatmethyl, Zoxamid

*3. Inhibition der Atmungskette*

*3.1 Komplex I*
Diflumetorim

*3.2 Komplex II*
Boscalid, Carboxin, Fenfuram, Flutolanil, Furametpyr, Mepronil, Oxycarboxin, Penthiopyrad, Thifluzamid

*3.3 Komplex III*
Azoxystrobin, Cyazofamid, Dimoxystrobin, Enestrobin, Famoxadon, Fenamidon, Fluoxastrobin, Kresoximmethyl, Metominostrobin, Orysastrobin, Pyraclostrobin, Picoxystrobin

*3.4 Entkoppler*
Dinocap, Fluazinam

*3.5 Inhibition der ATP Produktion*
Fentinacetat, Fentinchlorid, Fentinhydroxid, Silthiofam

*4. Inhibition der Aminosäure- und Proteinbiosynthese*
Andoprim, Blasticidin-S, Cyprodinil, Kasugamycin, Kasugamycinhydrochlorid Hydrat, Mepanipyrim, Pyrimethanil

*5. Inhibition der Signal Transduktion*
Fenpiclonil, Fludioxonil, Quinoxyfen

*6. Inhibition der Fett- und Membran Synthese*
Chlozolinat, Iprodion, Procymidon, Vinclozolin
Pyrazophos, Edifenphos, Iprobenfos (IBP), Isoprothiolan
Tolclofos-methyl, Biphenyl
Iodocarb, Propamocarb, Propamocarb hydrochlorid

*7. Inhibition der Ergosterol Biosynthese*
Fenhexamid,
Azaconazol, Bitertanol, Bromuconazol, Cyproconazol, Diclobutrazol, Difenoconazol, Diniconazol, Diniconazol-M, Epoxiconazol, Etaconazol, Fenbuconazol, Fluquinconazol, Flusilazol, Flutriafol, Furconazol, Furconazol-cis, Hexaconazol, Imibenconazol, Ipconazol, Metconazol, Myclobutanil, Paclobutrazol, Penconazol, Propiconazol, Prothioconazol, Simeconazol, Tebuconazol, Tetraconazol, Triadimefon, Triadimenol, Triticonazol, Uniconazol, Voriconazol, Imazalil, Imazalilsulfat, Oxpoconazol, Fenarimol, Flurprimidol, Nuarimol, Pyrifenox, Triforin, Pefurazoat, Prochloraz, Triflumizol, Viniconazol,
Aldimorph, Dodemorph, Dodemorphacetat, Fenpropimorph, Tridemorph, Fenpropidin, Spiroxamin,
Naftifin, Pyributicarb, Terbinafin

*8. Inhibition der Zellwand Synthese*
Benthiavalicarb, Bialaphos, Dimethomorph, Flumorph, Iprovalicarb, Polyoxins, Polyoxorim, Validamycin A

*9. Inhibition der Melanin Biosynthese*
Capropamid, Diclocymet, Fenoxanil, Phtalid, Pyroquilon, Tricyclazol

*10. Resistenzinduktion*
Acibenzolar-S-methyl, Probenazol, Tiadinil

*11. Multisite*

Captafol, Captan, Chlorothalonil, Kupfersalze wie: Kupferhydroxid, Kupfemaphthenat, Kupferoxychlorid, Kupfersulfat, Kupferoxid, Oxin-Kupfer und Bordeaux Mischung, Dichlofluanid, Dithianon, Dodin, Dodin freie Base, Ferbam, Fluorofolpet, Guazatin, Guazatinacetat, Iminoctadin, Iminoctadinalbesilat, Iminoctadintriacetat, Mankupfer, Mancozeb, Maneb, Metiram, Metiram Zink, Propineb, Schwefel und Schwefelpräparate enthaltend Calciumpolysulphid, Thiram, Tolylfluanid, Zineb, Ziram

*12. Unbekannt*

Amibromdol, Benthiazol, Bethoxazin, Capsimycin, Carvon, Chinomethionat, Chloropicrin, Cufraneb, Cyflufenamid, Cymoxanil, Dazomet, Debacarb, Diclomezine, Dichlorophen, Dicloran, Difenzoquat, Difenzoquat Methylsulphat, Diphenylamin, Ethaboxam, Ferimzon, flumetover, Flusulfamid, Fluopicolid, Fluoroimid, Hexachlorobenzol, 8-Hydroxychinolinsulfat, Irumamycin, Methasulphocarb, Metrafenon, Methyl Isothiocyanat, Mildiomycin, Natamycin, Nickel dimethyldithiocarbamat, Nitrothal-isopropyl,octhilinon, Oxamocarb, Oxyfenthiin, Pentachlorophenol und Salze, 2-Phenylphenol und Salze, Piperalin, Propanosin -Natrium, Proquinazid, Pyrrolnitrin, Quintozen, Tecloftalam, Tecnazen, Triazoxid, Trichlamid, Zarilamid and 2,3,5,6-Tetrachlor-4-(methylsulfonyl)-pyridin, N-(4-Chlor-2-nitrophenyl)-N-ethyl-4-methyl-benzenesulfonamid, 2-Amino-4-methyl-N-phenyl-5-thiazolecarboxamid, 2-Chlor-N-(2,3-dihydro-1,1,3-trimethyl-1H-inden-4-yl)-3-pyridincarboxamid, 3-[5-(4-Chlorphenyl)-2,3-dimethylisoxazolidin-3-yl]pyridin, cis-1-(4-Chlorphenyl)-2-(1H-1,2,4-triazol-1-yl)-cycloheptanol, 2,4-Dihydro-5-methoxy-2-methyl-4-[[[[1-[3-(trifluoromethyl)-phenyl]-ethyliden]-amino]-oxy]-methylJ-phenyl]-3H-1,2,3-triazol-3-on (185336-79-2), Methyl 1-(2,3-dihydro-2,2-dimethyl-1H-inden-1-yl)-1H-imidazole-5-carboxylat, 3,4,5-Trichlor-2,6-pyridindicarbonitril, Methyl 2-[[[cyclopropyl[(4-methoxyphenyl) imino]methyl]thio]methyl]-.alpha.-(methoxymethylen)- benzacetat, 4-Chlor-alpha-propinyloxy-N-[2-[3-methoxy-4-(2-propinyloxy)phenyl]ethyl]-benzacetamide, (2S)-N-[2-[4-[[3-(4-chlorophenyl)-2-propinyl] oxy]-3-methoxyphenyl]ethyl]- 3-methyl-2-[(methylsulfonyl)amino]-butanamid, 5-Chlor-7-(4-methylpiperidin-1-yl)-6-(2,4,6-trifluorophenyl)[1,2,4]triazolo[1,5-a]pyrimidin, 5-Chlor-6-(2,4,6-trifluorophenyl)-N-[(1R)-1,2,2-trimethylpropyl][1,2,4]triazolo[1,5-a]pyrimidin-7-amin, 5-Chlor-N-[(1R)-1,2-dimethylpropyl]-6-(2,4,6-trifluorophenyl) [1,2,4]triazolo[1,5-a]pyrimidin-7-amine, N-[1-(5-Brom-3-chloropyridin-2-yl)ethyl]-2,4-dichloronicotinamid, N-(5-Brom-3-chlorpyridin-2-yl)methyl-2,4-dichlornicotinamid, 2-Butoxy-6-iod-3-propyl-benzopyranon-4-on, N-{(Z)-[(cyclopropylmethoxy) imino][6-(difluormethoxy)-2,3-difluorphenyl]methyl}-2-benzacetamid, N-(3-Ethyl-3,5,5-trimethylcyclohexyl)-3-formylamino-2-hydroxy-benzamid, 2-[[[[1-[3(1Fluor-2-phenylethyl)oxy] phenyl] ethyliden]amino]oxy]methyl]-alpha-(methoxyimino)-N-methyl-alphaE-benzacetamid, N-{2-[3-Chlor-5-(trifluormethyl)pyridin-2-yl]ethyl}-2-(trifluoromethyl)benzamid, N-(3',4'-dichlor-5-fluorbiphenyl-2-yl)-3-(difluormethyl)-1-methyl-1H-pyrazol-4-carboxamid, N-(6-Methoxy-3-pyridinyl)-cyclopropan carboxamid, 1-[(4-Methoxyphenoxy)methyl]-2,2-dimethylpropyl-1H-imidazol-1-carbonsäure, O-[1-[(4-Methoxyphenoxy)methyl]-2,2-dimethylpropyl]-1H-imidazol-1-carbothioic acid, 2-(2-{[6-(3-Chlor-2-methylphenoxy)-5-fluorpyrimidin-4-yl]oxy}phenyl)-2-(methoxyimino)-N-methylacetamid

**Bakterizide:**

Bronopol, Dichlorophen, Nitrapyrin, Nickel-Dimethyldithiocarbamat, Kasugamycin, Octhilinon, Furancarbonsäure, Oxytetracyclin, Probenazol, Streptomycin, Tecloftalam, Kupfersulfat und andere Kupfer-Zubereitungen.

**Insektizide / Akarizide / Nematizide:**

*1. Acetylcholinesterase (AChE) Inhibitoren*

1.1 Carbamate (z.B. Alanycarb, Aldicarb, Aldoxycarb, Allyxycarb, Aminocarb, Azamethiphos, Bendiocarb, Benfuracarb, Bufencarb, Butacarb, Butocarboxim, Butoxycarboxim, Carbaryl, Carbofuran, Carbosulfan, Chloethocarb, Coumaphos, Cyanofenphos, Cyanophos, Dimetilan, Ethiofencarb, Fenobucarb, Fenothiocarb, Formetanate, Furathiocarb, Isoprocarb, Metam-sodium, Methiocarb, Methomyl, Metolcarb, Oxamyl, Pirimicarb, Promecarb, Propoxur, Thiodicarb, Thiofanox, Triazamate, Trimethacarb, XMC, Xylylcarb)

1.2 Organophosphate (z.B. Acephate, Azamethiphos, Azinphos (-methyl, -ethyl), Bromophos-ethyl, Bromfenvinfos (-methyl), Butathiofos, Cadusafos, Carbophenothion, Chlorethoxyfos, Chlor-fenvinphos, Chlormephos, Chlorpyrifos (-methyl/-ethyl), Coumaphos, Cyanofenphos, Cyanophos, Chlorfenvinphos, Demeton-S-methyl, Demeton-S-methylsulphon, Dialifos, Diazinon, Dichlofenthion, Dichlorvos/DDVP, Dicrotophos, Dimethoate, Dimethylvinphos, Dioxabenzofos, Disulfoton, EPN, Ethion, Ethoprophos, Etrimfos, Famphur, Fenamiphos, Fenitrothion, Fensulfothion, Fenthion, Flupyrazofos, Fonofos, Formothion, Fosmethilan, Fosthiazate, Heptenophos, Iodofenphos, Iprobenfos, Isazofos, Isofenphos, Isopropyl O-salicylate, Isoxathion, Malathion, Mecarbam, Methacrifos, Methamidophos, Methidathion, Mevinphos, Monocrotophos, Naled, Omethoate, Oxydemeton-methyl, Parathion (-methyl/-ethyl), Phenthoate, Phorate, Phosalone, Phosmet, Phosphamidon, Phosphocarb, Phoxim, Pirimiphos (-methyl/-ethyl), Profenofos, Propaphos, Propetamphos, Prothiofos, Prothoate, Pyraclofos, Pyridaphenthion, Pyridathion, Quinalphos, Sebufos, Sulfotep, Sulprofos, Tebupirimfos, Temephos, Terbufos, Tetrachlorvinphos, Thiometon, Triazophos, Triclorfon, Vamidothion)

*2. Natrium-Kanal-Modulatoren / Spannungsabhängige Natrium-Kanal-Blocker*

2.1 Pyrethroide (z.B. Acrinathrin, Allethrin (d-cis-trans, d-trans), Beta-Cyfluthrin, Bifenthrin, Bio-allethrin, Bioallethrin-S-cyclopentyl-isomer, Bioethanomethrin, Biopermethrin, Bioresmethrin, Chlovaporthrin, Cis-Cypermethrin, Cis-Resmethrin, Cis-Permethrin, Clocythrin, Cycloprothrin, Cyfluthrin, Cyhalothrin, Cypermethrin (alpha-, beta-, theta-, zeta-), Cyphenothrin, DDT, Deltamethrin, Empenthrin (1R-isomer), Esfenvalerate, Etofenprox, Fenfluthrin, Fenpropathrin, Fenpyrithrin, Fenvalerate, Flubrocythrinate, Flucythrinate, Flufenprox, Flumethrin, Fluvalinate, Fubfenprox, Gamma-Cyhalothrin, Imiprothrin, Kadethrin, Lambda-Cyhalothrin, Metofluthrin, Permethrin (cis-, trans-), Phenothrin (1R-trans isomer), Prallethrin, Profluthrin, Protrifenbute, Pyresmethrin, Resmethrin, RU 15525, Silafluofen, Tau-Fluvalinate, Tefluthrin, Terallethrin, Tetramethrin (1R-isomer), Tralomethrin, Transfluthrin, ZXI 8901, Pyrethrins (pyrethrum))

2.2 Oxadiazine (z.B. Indoxacarb)

*3. Acetylcholin-Rezeptor-Agonistenl-Antagonisten*

3.1 Chloronicotinyle/Neonicotinoide (z.B. Acetamiprid, Clothianidin, Dinotefuran, Imidacloprid, Nitenpyram, Nithiazine, Thiacloprid, Thiamethoxam)

3.2 Nicotine, Bensultap, Cartap

*4. Acetylcholin-Rezeptor-Modulatoren*

4.1 Spinosyne (z.B. Spinosad)

*5. GABA-gesteuerte Chlorid-Kanal-Antagonisten*

5.1 Cyclodiene Organochlorine (z.B. Camphechlor, Chlordane, Endosulfan, Gamma-HCH, HCH, Heptachlor, Lindane, Methoxychlor

5.2 Fiprole (z.B. Acetoprole, Ethiprole, Fipronil, Vaniliprole)

*6. Chlorid-Kanal-Aktivatoren*

6.1 Mectine (z.B. Abamectin, Avermectin, Emamectin, Emamectin-benzoate, Ivermectin, Milbemectin, Milbemycin)

*7. Juvenilhormon-Mimetika*
(z.B. Diofenolan, Epofenonane, Fenoxycarb, Hydroprene, Kinoprene, Methoprene, Pyriproxifen, Triprene)
*8. Ecdysonagonisten/disruptoren*

8.1 Diacylhydrazine (z.B. Chromafenozide, Halofenozide, Methoxyfenozide, Tebufenozide)

*9. Inhibitoren der Chitinbiosynthese*

9.1 Benzoylharnstoffe (z.B. Bistrifluron, Chlofluazuron, Diflubenzuron, Fluazuron, Flucycloxuron, Flufenoxuron, Hexaflumuron, Lufenuron, Novaluron, Noviflumuron, Penfluron, Teflubenzuron, Triflumuron)

9.2 Buprofezin

9.3 Cyromazine

*10. Inhibitoren der oxidativen Phosphorylierung, ATP-Disruptoren*

10.1 Diafenthiuron

10.2 Organotine (z.B. Azocyclotin, Cyhexatin, Fenbutatin-oxide)

*11. Entkoppler der oxidativen Phoshorylierung durch Unterbrechung des H-Protongradienten*

11.1 Pyrrole (z.B. Chlorfenapyr)

11.2 Dinitrophenole (z.B. Binapacyrl, Dinobuton, Dinocap, DNOC)

*12. Site-I-Elektronentransportinhibitoren*

12.1 METI's (z.B. Fenazaquin, Fenpyroximate, Pyrimidifen, Pyridaben, Tebufenpyrad, Tolfenpyrad)

12.2 Hydramethylnone

12.3 Dicofol

*13. Site-II-Elektronentransportinhibitoren*

13.1 Rotenone

*14. Site-III-Elektronentransportinhibitoren*

14.1 Acequinocyl, Fluacrypyrim

*15. Mikrobielle Disruptoren der Insektendarmmembran*
Bacillus thuringiensis-Stämme
*16. Inhibitoren der Fettsynthese*

16.1 Tetronsäuren (z.B. Spirodiclofen, Spiromesifen)

16.2 Tetramsäuren [z.B. 3-(2,5-Dimethylphenyl)-8-methoxy-2-oxo-1-azaspiro[4.5]dec-3-en-4-yl ethyl carbonate (alias: Carbonic acid, 3-(2,5-dimethylphenyl)-8-methoxy-2-oxo-1-azaspiro[4.5]dec-3-en-4-yl ethyl ester, CAS-Reg.-No.: 382608-10-8) and Carbonic acid, cis-3-(2,5-dimethylphenyl)-8-methoxy-2-oxo-1-azwpiro[4.5]dec-3-en-4-yl ethyl ester (CAS-Reg.-No.: 203313-25-1)]

*17. Carboxamide*
(z.B. Flonicamid)
*18. Oktopaminerge Agonisten*
(z.B. Amitraz)
*19. Inhibitoren der Magnesium-stimulierten ATPase*
(z.B. Propargite)
*20. Phthalamide*
(z.B. $N^2$-[1,1-Dimethyl-2-(methylsulfonyl)ethyl]-3-iod-$N^1$-[2-methyl-4-[1,2,2,2-tetrafluor-1-(trifluormethyl)ethyl]phenyl]-1,2-benzenedicarboxamide (CAS-Reg.-No.: 272451-65-7), Flubendiamide)
*21. Nereistoxin-Analoge*
(z.B. Thiocyclam hydrogen oxalate, Thiosultap-sodium)
*22. Biologika, Hormone oder Pheromone*
(z.B. Azadirachtin, Bacillus spec., Beauveria spec., Codlemone, Metarrhizium spec., Paecilomyces spec., Thuringiensin, Verticillium spec.)
*23. Wirkstoffe mit unbekannten oder nicht spezifischen Wirkmechanismen*

23.1 Begasungsmittel (z.B. Aluminium phosphide, Methyl bromide, Sulfuryl fluoride)

23.2 Selektive Fraßhemmer (z.B. Cryolite, Flonicamid, Pymetrozine)

23.3 Milbenwachstumsinhibitoren (z.B. Clofentezine, Etoxazole, Hexythiazox)

23.4 Amidoflumet, Benclothiaz, Benzoximate, Bifenazate, Bromopropylate, Buprofezin, Chinomethionat, Chlordimeform, Chlorobenzilate, Chloropicrin, Clothiazoben, Cycloprene, Cyflumetofen, Dicyclanil, Fenoxacrim, Fentrifanil, Flubenzimine, Flufenerim, Flutenzin, Gossyplure, Hydramethylnone, Japonilure, Metoxadiazone, Petroleum, Piperonyl butoxide, Potassium oleate, Pyrafluprole, Pyridalyl, Pyriprole, Sulfluramid, Tetradifon, Tetrasul, Triarathene, Verbutin,

ferner die Verbindung 3-Methyl-phenyl-propylcarbamat (Tsumacide Z), die Verbindung 3-(5-Chlor-3-pyridinyl)-8-(2,2,2-trifluorethyl)-8-azabicyclo[3.2.1]octan-3-carbonitril (CAS-Reg.-Nr. 185982-80-3) und das entsprechende 3-endo-Isomere (CAS-Reg.-Nr. 185984-60-5) (vgl. WO 96/37494, WO 98/25923), sowie Präparate, welche insektizid wirksame Pflanzenextrakte, Nematoden, Pilze oder Viren enthalten.

Auch eine Mischung mit anderen bekannten Wirkstoffen, wie Herbiziden, Safenern bzw. Semiochemicals, oder mit Düngemitteln und Wachstumsregulatoren ist möglich.

Die Verbindungen (I), (II) und (III) können gleichzeitig, und zwar gemeinsam oder getrennt, oder nacheinander aufgebracht werden, wobei die Reihenfolge bei getrennter Applikation im Allgemeinen keine Auswirkung auf den Bekämpfungserfolg hat.

Die Wirkstoffkombinationen können als solche, in Form ihrer Formulierungen oder den daraus bereiteten Anwendungsformen, wie gebrauchsfertige Lösungen, emulgierbare Konzentrate, Emulsionen, Suspensionen, Spritzpulver, lösliche Pulver und Granulate, angewendet werden. Die Anwendung geschieht in üblicher Weise, z.B. durch Gießen, Verspritzen, Versprühen, Verstreuen, Verstreichen, Trockenbeizen, Feuchtbeizen, Nassbeizen, Schlämmbeizen oder Inkrustieren.

Beim Einsatz der erfindungsgemäßen Wirkstoffkombinationen können die Aufwandmengen je nach Applikationsart innerhalb eines größeren Bereichs variiert werden. Bei der Behandlung von Pflanzenteilen liegen die Aufwandmengen an Wirkstoffkombination im allgemeinen zwischen 0,1 und 10 000 g/ha, vorzugsweise zwischen 10 und 1 000 g/ha. Bei der Saatgutbehandlung liegen die Aufwandmengen an Wirkstoffkombination im allgemeinen zwischen 0,001 und 50 g pro Kilogramm Saatgut, vorzugsweise zwischen 0,01 und 10 g pro Kilogramm Saatgut. Bei der Behandlung des Bodens liegen die Aufwandmengen an Wirkstoffkombination im allgemeinen zwischen 0,1 und 10 000 g/ha, vorzugsweise zwischen 1 und 5 000 g/ha.

Die gute fungizide Wirkung der erfindungsgemäßen Wirkstoffkombinationen geht aus den nachfolgenden Beispielen hervor. Während die einzelnen Wirkstoffe in der fungiziden Wirkung Schwächen aufweisen, zeigen die Kombinationen eine Wirkung, die über eine einfache Wirkungssummierung hinausgeht.

Ein synergistischer Effekt liegt bei Fungiziden immer dann vor, wenn die fungizide Wirkung der Wirkstoffkombinationen größer ist als die Summe der Wirkungen der einzeln applizierten Wirkstoffe.

Die zu erwartende Wirkung für eine gegebene Kombination zweier Wirkstoffe kann nach S.R. Colby ("Calculating Synergistic and Antagonistic Responses of Herbicide Combinations", Weeds 15 (1967), 20-22) wie folgt berechnet werden:

Wenn

X den Wirkungsgrad beim Einsatz des Wirkstoffes A in einer Aufwandmenge von $\underline{m}$ g/ha bedeutet,

Y den Wirkungsgrad beim Einsatz des Wirkstoffes B in einer Aufwandmenge von $\underline{n}$ g/ha bedeutet und

E den Wirkungsgrad beim Einsatz der Wirkstoffe A und B in Aufwandmengen von $\underline{m}$ und $\underline{n}$ g/ha bedeutet,

dann ist

$$E = X + Y - \frac{X \cdot Y}{100}$$

Dabei wird der Wirkungsgrad in % ermittelt. Es bedeutet 0 % ein Wirkungsgrad, der demjenigen der Kontrolle entspricht, während ein Wirkungsgrad von 100 % bedeutet, dass kein Befall beobachtet wird.

Ist die tatsächliche fungizide Wirkung größer als berechnet, so ist die Kombination in ihrer Wirkung überadditiv, d.h. es liegt ein synergistischer Effekt vor. In diesem Fall muss der tatsächlich beobachtete Wirkungsgrad größer sein als der aus der oben angeführten Formel errechnete Wert für den erwarteten Wirkungsgrad (E).

Eine weitere Methode zur Bestimmung von synergistischen Effekten bietet das Tammes-Modell (Neth. J. Plant Path. 70 (1964) 73-80), bei dem z.B. die theoretische Dosierung für einen Wirkungsgrad von 90% ermittelt und mit der tatsächlich notwendigen Dosierung verglichen wird.

Die Erfindung wird durch die folgenden Beispiele veranschaulicht. Die Erfindung ist jedoch nicht auf die Beispiele limitiert.

**Beispiel**

Synergistische protektive Wirkung einer Kombination von Trifloxystrobin / Folpet und Fosetyl-Al gegen *Plasmopara viticola* an Reben.

Die Mischung aus Trifloxystrobin und Folpet wurde als Kombination der kommerziell erhältlichen Einzelkomponenten in WG-Formulierungen (Flint® enthaltend 50 Gew. % Trifloxystrobin und Acryptane UltraDisp® enthaltend 80 Gew. % Folpet) eingesetzt.

Fosetyl-Al wurde als kommerzielle WG-Formulierung (Aliette®, enthaltend 80 Gew. % Fosetyl-Al) eingesetzt.

Zur Prüfung auf preventive Wirksamkeit wurde eine Spritzapplikation an jungen Weinpflanzen der Rebsorte Cabernet Sauvignon mit den Wirkstoffzubereitungen vorgenommen (Aufwandmenge 2501 Spritzbrühe per Hektar). In der Wirkstoffzubereitung aus Trifloxystrobin, Folpet und Fosetyl-Al betrug das Gew.- Verhältnis von Trifloxystrobin zu Folpet zu Aliette® (Fosetyl-Al) 1,55:25: 50.

Nach 3 Tagen wurden die Pflanzen mit einer wässrigen Sporensuspension von *Plasmopara viticola* (ungefähr $10^5$ Sporen / ml) inokuliert. Danach wurden die Pflanzen für 7 Tage bei 20° C in gesättigter Atmosphäre inkubiert.

Anschließend erfolgte die Auswertung. Dabei bedeutet 0% einen Wirkungsgrad, der demjenigen der Kontrolle entspricht, während ein Wirkungsgrad von 100% bedeutet, dass kein Befall beobachtet wird.

Tabelle 1: Synergismus zwischen Trifloxystrobin / Folpet und Fosetyl-Al nach Tammes

| Verhältnis Trifloxystrobin / Folpet als WG(mg/l) Fosetyl-Al als Aliette®-WG (mg/l) | 1.55: (25): 50 | Trifloxystrobin / Folpet als Mischung aus Flint® und Acryptane Ultra Disp® | Fosetyl-Al als Aliette®-WG |
|---|---|---|---|
| Beobachtete Aufwandmenge für 90% Wirkungsgrad | 6,1<br>196,7 | 13 | 1015 |
| Berechnete Aufwandmenge für 90% Wirkungsgrad | 9,3<br>300 | - | - |

Der Versuch bzw. die Auswertungsmethode belegt einen Synergismus zwischen Trifloxystrobin / Folpet und Fosetyl-Al.

**Patentansprüche**

1. Wirkstoffkombination, enthaltend eine Verbindung der Formel (I)

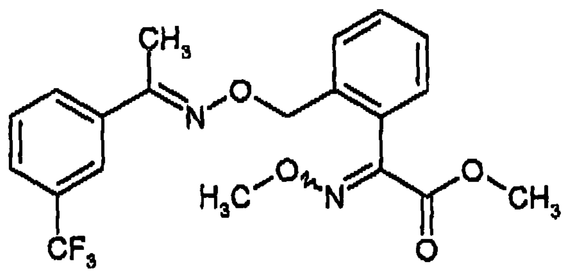

(I)

und

(1) eine Verbindung der Formel (II)

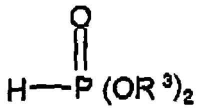

(II)

wobei

$R^3$ gleich oder verschieden für H, $^1/_n M^{n+}$ oder ($C_1$-$C_4$)-Alkyl und
M für ein Kation steht;

und
(2) eine Verbindung der Formel (III)

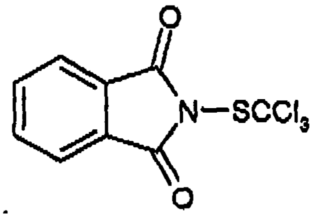

(III)
(Folpet)

in eine synergistische Wirkung erzeugenden Mengen.

**2.** Wirkstoffkombination gemäß Anspruch 1, in welcher die Verbindung der Formel (II) $HP(O)(OH)_2$, HP(O)(OH)(OK), $HP(O)(OK)_2$, $HP(O)(OC_2H_5)(ONa)$ oder $[HP(O)(OC_2H_5)O]_3$ Al ist.

**3.** Wirkstoffkombination gemäß Anspruch 2, in welcher die Verbindung der Formel (II) $[H\ P(O)(OC_2H_5)O]_3$ Al (Fosetyl-Al) ist.

**4.** Wirkstoffkombination gemäß einem oder mehreren der Ansprüche 1 bis 3, **dadurch gekennzeichnet, dass** in der Wirkstoffkombination das Gewichtsverhältnis von Wirkstoff der Formel (I) zu

- Wirkstoff der Formel (II) 1:0,1 bis 1:100 beträgt, und zu
- Wirkstoff der Formel (III) 1:0,1 bis 1:100 beträgt.

**5.** Wirkstoffkombination gemäß einem oder mehreren der Ansprüche 1 bis 3, **dadurch gekennzeichnet, dass** in der Wirkstoffkombination das Gewichtsverhältnis von Wirkstoff der Formel (I) zu

- Wirkstoff der Formel (II) 1:8 bis 1.24 beträgt, und zu
- Wirkstoff der Formel (III) 1:16 bis 1:48 beträgt.

**6.** Verfahren zur Bekämpfung von phytopathogenen Pilzen, **dadurch gekennzeichnet, dass** man eine Wirkstoffkombination gemäß einem oder mehreren der Ansprüche 1 bis 5 auf die Pilze und / oder deren Lebensraum oder die von ihnen freizuhaltenden Pflanzen, Pflanzenteile, Samen, Böden, Flächen, Materialien oder Räume einwirken lässt.

**7.** Verfahren gemäß Anspruch 6, **dadurch gekennzeichnet dass** man die Verbindung (I) gemäß Anspruch 1, die Verbindung (II) gemäß Anspruch 1 und die Verbindung (III) gemäß einem oder mehrerer der Ansprüche 1 bis 3 gleichzeitig gemeinsam oder getrennt oder nacheinander ausbringt.

**8.** Vermehrungsmaterial, beschichtet mit einer Wirkstoffkombination gemäß einem oder mehreren der Ansprüche 1 bis 5.

**9.** Fungizide Mittel, enthaltend einen Gehalt an einer Wirkstoffkombination wie in Anspruch 1 definiert.

**10.** Verwendung der Wirkstoffkombination bzw. Mittel wie in den Ansprüchen 1, 2, 3,4,5 und 9 definiert zur Bekämpfung von Pilzen.

11. Verfahren zur Herstellung von fungiziden Mitteln, **dadurch gekennzeichnet, dass** man die Wirkstoffe der Wirkstoffkombinationen gemäß einem oder mehreren der Ansprüche 1 bis 5 mit Streckmitteln und/oder oberflächenaktiven Stoffen vermischt.

## Claims

1. Active substance combination, comprising a compound of the formula (I)

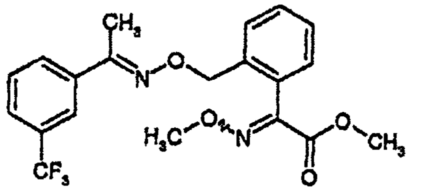

(I)

and

(1) a compound of the formula (II)

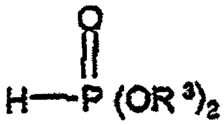

(II)

where

R3 radicals are identical or different and represent H, $\frac{1}{n}M^{n+}$ or $(C_1\text{-}C_4)$ alkyl and

M represents a cation;

and
(2) a compound of the formula (III)

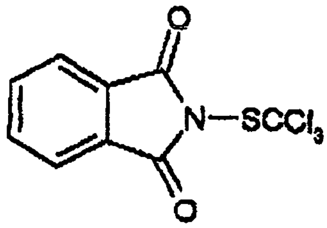

(III)
(folpet)

in amounts such that a synergistic effect is generated.

2. Active substance combination according to Claim 1, in which the compound of the formula (II) is $HP(O)(OH)_2$, HP (O)(OH)(OK), $HP(O)(OK)_2$, $HP(O)(OC_2H_5)(ONa)$ or $[HP(O)(OC_2H_5)O]_3Al$.

3. Active substance combination according to Claim 2, in which the compound of the formula (II) is $[HP(O)\ (OC_2H_5)O]_3Al$ (fosetyl-Al).

4. Active substance combination according to one or more of Claims 1 to 3, **characterized in that**, in the active substance combination, the weight ratio of active substance of the formula (I) to

- active substance of the formula (II) is 1:0.1 to 1:100, and to
- active substance of the formula (III) is 1:0.1 to 1:100.

5. Active substance combination according to one or more of Claims 1 to 3, **characterized in that**, in the active substance combination, the weight ratio of active substance of the formula (I) to

   - active substance of the formula (II) is 1:8 to 1:24, and to
   - active substance of the formula (III) is 1:16 to 1:48.

6. Method of controlling phytopathogenic fungi, **characterized in that** an active substance combination according to one or more of Claims 1 to 5 is allowed to act on the fungi and/or their environment or on the plants, plant parts, seeds, soils, areas, materials or spaces to be kept free from them.

7. Method according to Claim 6, **characterized in that** the compound (I) according to Claim 1, the compound (II) according to Claim 1 and the compound (III) according to one or more of Claims 1 to 3 are applied simultaneously together or separately or in succession.

8. Propagation material coated with an active substance combination according to one or more of Claims 1 to 5.

9. Fungicidal compositions containing a content of an active substance combination as defined in Claim 1.

10. Use of the active substance combination or compositions as defined in Claims 1, 2, 3, 4, 5 and 9 for controlling fungi.

11. Method for the preparation of fungicidal compositions, **characterized in that** the active substances of the active substance combinations according to one or more of Claims 1 to 5 are mixed with extenders and/or surface-active substances.

**Revendications**

1. Combinaison de substances actives, contenant un composé de formule (I)

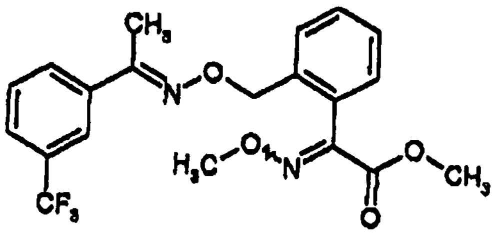

(I)

et

(1) un composé de formule (II)

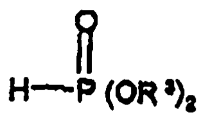

(II)

dans laquelle
$R^3$ représente, avec des valeurs identiques ou différentes, H, $^1/_nM^{n+}$ ou un reste alkyle en $C_1$ à $C_4$ et
M représente un cation;
et
(2) un composé de formule (III)

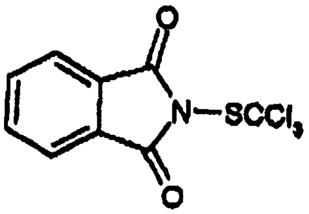

(III)

(Folpet)

en quantités produisant un effet synergique.

**2.** Combinaison de substances actives suivant la revendication 1, dans laquelle le composé de formule (II) est HP(O)(OH)$_2$, HP(O)(OH)(OK), HP(O)(OK)$_2$, HP(O) (OC$_2$H$_5$) (ONa) ou [HP(O) (OC$_2$H$_5$)O]$_3$Al.

**3.** Combinaison de substances actives suivant la revendication 2, dans laquelle le composé de formule (II) est [HP (O) (OC$_2$H$_5$)O]$_3$Al (fosétyl-Al).

**4.** Combinaison de substances actives suivant une ou plusieurs des revendications 1 à 3, **caractérisée en ce que** dans la combinaison de substances actives, le rapport en poids de la substance active de formule (I)

- à la substance active de formule (II), va de 1:0,1 à 1:100 et
- à la substance active de formule (III) va de 1:0,1 à 1:100.

**5.** Combinaison de substances actives suivant une ou plusieurs des revendications 1 à 3, **caractérisée en ce que** dans la combinaison de substances actives, le rapport en poids de la substance active (I)

- à la substance active de formule (I), va de 1:8 à 1:24 et
- à la substance active de formule (III), va de 1:16 à 1:48.

**6.** Procédé de lutte contre des champignons phytopathogènes, **caractérisé en ce qu'**on fait agir une combinaison de substances actives suivant une ou plusieurs des revendications 1 à 5 sur les champignons et/ou sur leur milieu ou sur les plantes, les parties de plantes, les graines, les sols, les surfaces, les matériaux ou les espaces qui doivent en être maintenus exempts.

**7.** Procédé suivant la revendication 6, **caractérisé en ce que** le composé (I) suivant la revendication 1, le composé (II) suivant la revendication 1 et le composé (III) suivant une ou plusieurs des revendications 1 à 3 sont épandus simultanément ensemble ou séparément, ou successivement.

**8.** Matière de multiplication, revêtue d'une combinaison de substances actives suivant une ou plusieurs des revendications 1 à 5.

**9.** Compositions fongicides comprenant une teneur en une combinaison de substances actives telle que définie dans la revendication 1.

**10.** Utilisation de la combinaison de substances actives ou des compositions telles que définies dans les revendications 1, 2, 3, 4, 5 ou 9 pour la lutte contre des champignons.

**11.** Procédé de préparation de compositions fongicides, **caractérisé en ce qu'**on mélange les substances actives des compositions de substances actives suivant une ou plusieurs des revendications 1 à 5 avec des diluants et/ou des substances tensioactives.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0460575 A
- FR 2254276 A
- US 2553770 A
- WO 0036916 A
- EP 460575 A
- RU 15525
- WO 9637494 A
- WO 9825923 A


### In der Beschreibung aufgeführte Nicht-Patentliteratur


- **C.D.S. TONLIN.** The Pesticide Manual. British Crop-Protection Council, vol. 13
- **S.R. COLBY.** Calculating Synergistic and Antagonistic Responses of Herbicide Combinations. *Weeds,* 1967, vol. 15, 20-22
- *Neth. J. Plant Path.,* 1964, vol. 70, 73-80